# EUROPEAN PATENT APPLICATION

(11) **EP 3 090 884 A1**
(43) Date of publication of application: **09.11.2016**
(21) Application number: 14867813.9
(22) Date of filing: 04.12.2014
(51) Int. Cl.: B60B 7/01, B60B 7/04

(54) **IMAGE BOARD FOR ROTATION WHEEL AND ROTATION WHEEL INCLUDING SAME**

(30) Priority: 04.12.2013 KR 20130149708
(71) Applicant: Yoo, Chung Sup, Incheon 405-862 (KR); Kim, Yoon Hwa, Incheon 405-862 (KR); Kim, Sung Hun, Incheon 405-839 (KR)
(72) Inventor: Yoo, Chung Sup, Incheon 405-862 (KR); Kim, Yoon Hwa, Incheon 405-862 (KR); Kim, Sung Hun, Incheon 405-839 (KR)
(74) Representative: Kugler, Jörg
(86) International application number: PCT/KR2014/011855
(87) International publication number: WO 2015/084084

(57) **Abstract**

Provided is an image board for a rotation wheel that is mounted on a rotation wheel (200) of a vehicle (1) and shows a still image (I) regardless of rotation of the rotation wheel (200). The image board includes: a base plate (110) that is vertically disposed outside or inside a wheel frame (210) mounted on the rotation wheel (200) to rotate independently from the wheel frame (210) and has a predetermined image (I) on one side or both sides; and an impeller (120) that is fastened to a lower portion of the base plate (110) and rotates in the opposite direction to the rotation wheel (200) by wind that flows inside when the vehicle (1) runs.

## Description

### [Technical Field]

The present invention relates to an image board for a rotation wheel and a rotation wheel including the same and, more particularly, to an image board for a rotation wheel that is mounted on a rotation wheel of a vehicle such as a car or a bicycle and displays a still image regardless of rotation of the rotation wheel.

### [Background Art]

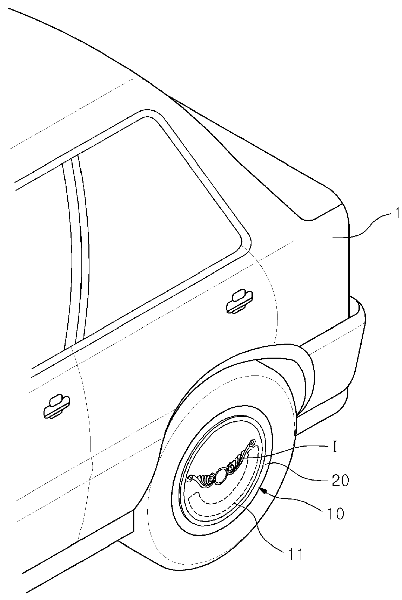

FIGS. 1 to 3 show the configuration of an image board for a rotation wheel in the related art.

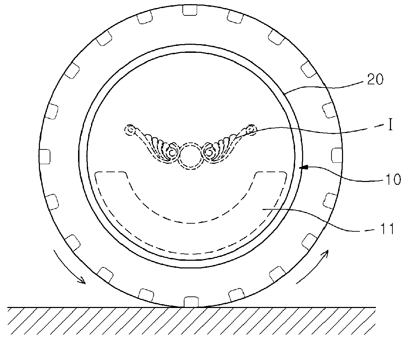

Referring to FIGS. 1 and 2, an image board 10 for a rotation wheel in the related art is equipped with a weight 11 having predetermined weight at a lower portion and is rotatably mounted on a side of a wheel frame 20 of a car 1 by a bearing (not shown). An image I that may be various images including a logo, an emblem, or an advertising image is on the outer surface of the image board 10, so it is possible to achieve advertising and decorative effects as an accessory by keeping the image I in a stop state even though the wheel frame 20 is rotated while the car 1 runs.

However, while the bearing is rotated such that the wheel frame 20 and the image board 10 are rotated relative to each other, friction is generated by bearing balls in the bearing.

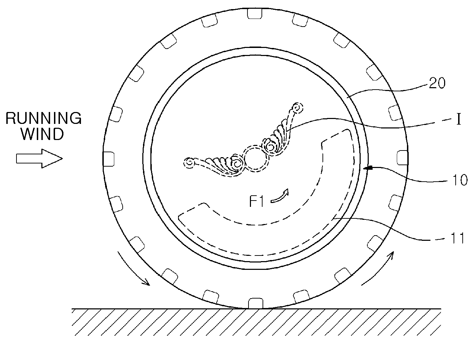

Further, while the car 1 runs, running wind is generated to generates friction on the image board 10 exposed to the outside, so torque F1 is generated in the image board 10, as shown in FIG. 3. Accordingly, there is a problem that the image board 10 that is not rotated when the car runs at a low speed is rotated along with the rotation direction of the wheel frame 20 when the car runs at a high speed.

Further, since the weight 11 is eccentrically disposed at the lower portion of the image board 10, when the weight 11 is rotated along with the image board 10 due to malfunction of the bearing, vibration is generated by an eccentric weight change of the weight 11, in which the heavier the weight 11, the more the vibration increases. Further, the difference in weight applied on two rotation wheels disposed on the same shaft adversely influences steering function of the car 1, so it may cause a safety accident.

### [Disclosure]

### [Technical Problem]

The present invention is directed to providing an image board for a rotation wheel that can always display a still image even if a wheel is rotated at a high speed, using rotational inertia of an impeller and friction applied on the blades of the impeller, by mounting the impeller, which is rotated in opposite direction to the wheel by wind flowing inside when a vehicle runs, at a lower portion of an image board without eccentricity by a weight and the impeller, and a rotation wheel including the image board.

### [Technical Solution]

One aspect of the present invention provides an image board for a rotation wheel that is mounted on a rotation wheel 200 of a vehicle 1 and displays a still image I regardless of rotation of the rotation wheel 200, in which the image board includes: a base plate 110 that is vertically disposed outside or inside a wheel frame 210 mounted on the rotation wheel 200 to rotate independently from the wheel frame 210 and has a predetermined image I on one side or both sides; and an impeller 120 that is fastened to a lower portion of the base plate 110 and rotates in the opposite direction to the rotation wheel 200 by running wind that flows inside when the vehicle 1 runs;

The image board may further include: a fastening plate 130 that is vertically fastened to an outer side of the wheel frame 210 and rotates along with the wheel frame 210; and a bearing assembly 140 that is fitted in the center of the fastening plate 130, in which the base plate 110 may be fitted on the bearing assembly 140 and vertically mounted on the outer side of the wheel frame 210 to be rotated independently from the wheel frame 210 by the bearing assembly 140.

The image board may further include a bearing assembly 140 that is laterally fitted on a horizontal rotational shaft 211 of the wheel frame 210 by an inserting hole therein, in which and the base plate 110 may be fitted on the outer circumference of the bearing assembly 140 and vertically fitted inside the wheel frame 210 to be rotated independently from the wheel frame 210 by the bearing assembly 140.

Another aspect of the present invention provide a rotation wheel that is mounted at a lower portion of a vehicle 1, rotates to drive the vehicle 1, and shows a still image I, in which the rotation wheel includes: a wheel frame 210 that is fitted in a tire 212 and rotated by power; and an image board 100 including: a base plate 110 that is vertically disposed outside or inside the wheel frame 210 mounted on the wheel 200 to rotate independently from the wheel frame 210 and has a predetermined image I on one side or both sides; and an impeller 120 that is fastened to a lower portion of the base plate 110 and rotates in the opposite direction to the wheel frame 210 by running wind that flows inside when the vehicle 1 runs.

### [Advantageous Effects]

According to the present invention, the following effects can be achieved.

First, since the impeller 120 that is rotated in the opposite direction to the wheel frame 210 by running wind that flows inside when the vehicle 1 runs is mounted at a lower portion of the base plate 110, the image I can be fixed and shown without rotating by inertia generated by rotation of the impeller 120 and friction on the blades 121 even though the wheel frame 210 rotates at a high speed while the vehicle 1 runs.

Further, as the wheel frame 210 rotates at higher speeds, the rotational speed of the impeller 120 is increased and the generated inertia force and the friction force are increased, it is possible to keep the image I fixed regardless of the rotational speed of the wheel frame 210.

Second, since it is possible to vertically mount the base plate 110 on the outer side of the wheel frame 210 such that it can be rotated independently from the wheel frame 210 by the bearing assembly 140, using the fastening plate 130 vertically mounted on the outer side of the wheel frame 210 to rotate along with the wheel frame 210 and the bearing assembly 140 fastened to the center of the fastening plate 130, it is possible to more firmly and rotatably fasten the image board 100 to the wheel frame 210 and it is also possible to minimize friction generated by rotation relative to the wheel frame 210.

Third, in a vehicle 1 having the wheel frame 210 of which the sides are open through spokes 215, similar to a bicycle, a motor cycle, a golf car, a wheelchair, and a cart, since the inside of the bearing assembly 140 is laterally inserted and then fitted on the horizontal rotational shaft 211 of the wheel frame 210 and the base plate 110 is fitted on the outside of the bearing assembly 140 and vertically fitted inside the wheel frame 210 to rotate independently from the wheel frame 210, the image board 100 can be protected from the outside by the spokes 215 without being exposed to the outside and the external appearance can be improved.

Fourth, since the three weights 160 are arranged with regular intervals around the circumferential edge of the base plate 110, the eccentricity of the total weight of the image board 100 is prevented by the weights 160, so even if the weights 160 are rotated along with the base plate 110 due to malfunction of the bearing assembly 140, it is possible to preclude the problem that vibration is generated or steering function is adversely influenced by the eccentricity of the weights, thereby causing a safety accident.

Fifth, since the compensating weight 170 having weight corresponding to the weight of the impeller 120 is disposed around the circumferential edge of the base plate 110, it is possible to compensate for the phenomenon that the total weight of the image board 100 concentrates on the impeller 120 mounted on the base plate 110.

Sixth, since the bearing assembly 140 is composed of a plurality of bearings 141, 142, and 143 having different diameters and sequentially fitted in larger ones, torque F1 that rotates the image board 100 can be reduced by friction and inertia generated by rotation of the bearings 141, 142, and 143.

Further, when the bearing assembly 140 is composed of three bearings 141, 142, and 143 or more, rotation of the base plate 110 by the innermost bearing 141 and rotation of the wheel frame 210 by the outermost bearing 143 can be physically separated by the bearing 142 between the innermost bearing 141 and the outermost bearing 143, thereby further reducing the torque F1.

### [Description of Drawings]

FIGS. 1 to 3 are a perspective view and side views showing the configuration of an image board for a rotation wheel in the related art.
FIG. 4 is an exploded perspective view showing a configuration for fastening an image board for a rotation wheel according to an embodiment of the present invention to a wheel frame.
FIG. 5 is a cross-sectional view showing the configuration of the image board for a rotation wheel according to an embodiment of the present invention.
FIGS. 6 and 7 are side views showing that the image board for a rotation wheel according to an embodiment of the present invention is mounted on various vehicles.

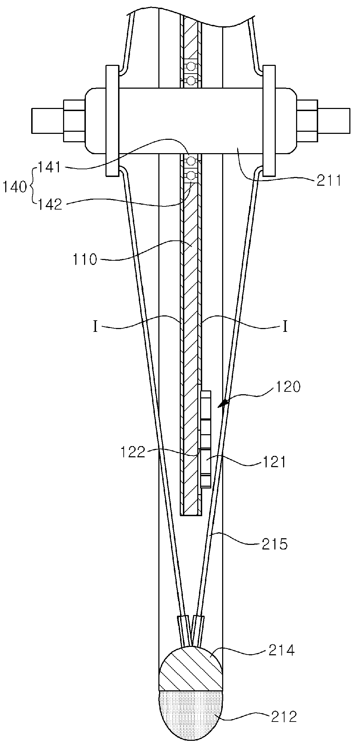

FIGS. 8 to 10 are exploded perspective views showing that the image board for a rotation wheel according to an embodiment of the present invention is mounted on a wheel frame with both sides open.
FIG. 11 is a schematic view illustrating the operation principle of the image board for a rotation wheel according to an embodiment of the present invention.
FIGS. 12 and 13 are a cross-sectional view and a schematic view illustrating the configurations of various weights according to embodiments of the present invention.
FIGS. 14 and 15 are cross-sectional view illustrating the configuration of a lead bearing according to an embodiment of the present invention.

### [Modes of the Invention]

The objects, features, and advantages of the present invention described above will be made clear by the following detailed description. Hereinafter, exemplary embodiments of the present invention are described with reference to the accompanying drawings.

A rotation wheel 200 according to an embodiment of the present invention, which is mounted at a lower portion of a vehicle 1 for driving the vehicle 1 and is equipped with an image board 100 displaying a still image I regardless of rotation of the rotation wheel 200, includes a wheel frame 210 and the image board 100.

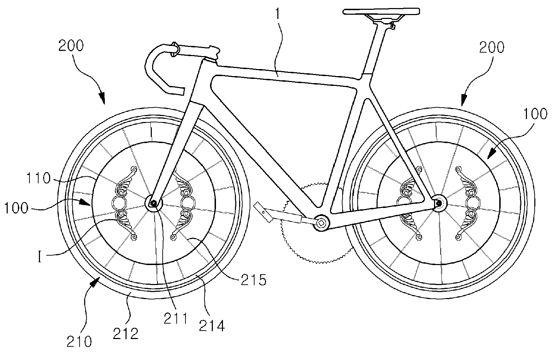

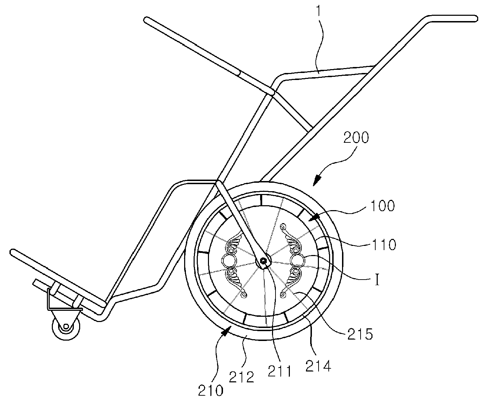

The vehicle 1 can be moved by the rotation wheel 200 and the rotation wheel 200 has the wheel frame 210 on which the image board 100 can be mounted. As shown in FIGS. 1, 6, and 7, the vehicle 1 includes a car, bicycle, and a cart, and other vehicles equipped with the rotation wheel 200 having the wheel frame 210 such as a motor cycle, a golf cart, a wheelchair, and a baby walker can all be applied to the present invention.

The wheel frame 210, which is a part to be fitted in a tire 212 and rotated by power, is mounted with the image board 100 that can independently rotate, may be formed in an integrated type such as the wheel frames for cars or golf carts, depending on the type of the vehicle 1, and may be fitted on a rotary shaft (power shaft). The wheel frame 210, similar to those of a bicycle, a motor cycle, a wheelchair, and a cart, may include a rim 214 that is fitted in a tire 212, a rotational shaft 211 that is disposed at the center of the rim 214 and is rotated by torque supplied from a chain, and a plurality of spokes 215 that connects the rotational shaft 211 and the rim 214 to each other to support load.

The image board 100, which is independently rotatably mounted on the wheel frame 210 to display a still image I regardless of rotation of the wheel frame 210, includes: a base plate 110 that is vertically disposed outside or inside the wheel frame 210 to rotate independently from the wheel frame 210 and has a predetermined image I on one side or both sides; and an impeller 120 that is fastened to a lower portion of the base plate 110 and rotates in the opposite direction to the wheel frame 210 by running wind that flows inside when the vehicle 1 runs.

The image I, which is an image designed in various types such as a logo, an emblem, or an advertising image, may be directly printed on the base plate 110, or may be implemented by attaching a printed sheet to the base plate 110 or by drawing an image on a specific image plate and then attaching the image plate to the base plate 110.

Further, when the wheel frame 210 is a wheel frame for a car of which a side is exposed and the other side is not exposed, the image I may be disposed on the outer side of the base plate 110, but when the wheel frame 210 is exposed at both sides such as a wheel for a bicycle, the image I may be disposed on both sides of the base plate 110, respectively, to increase the effect of exposing the image.

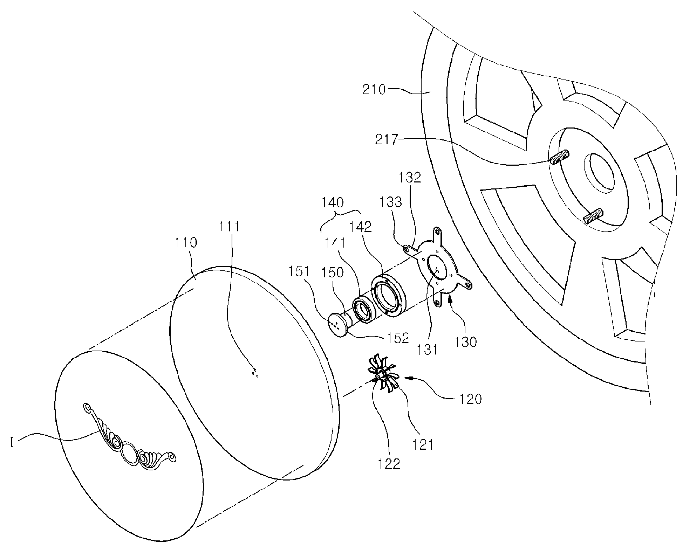

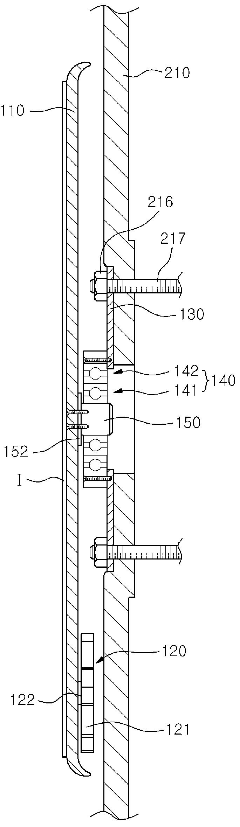

In more detail, as shown in FIGS. 4 and 5, when the wheel frame 210 is exposed at only one side, the image board may further include: a fastening plate 130 that is vertically fastened to the outer side of the wheel frame 210 to rotate along with the wheel frame 210; and a bearing assembly 140 that is coupled to the center of the fastening plate 130.

Further, the base plate 110 may be coupled to the bearing assembly 140 and mounted vertically on the outside of the wheel frame 210 such that it can rotate independently from the wheel frame 210 by the bearing assembly 140.

Further, as shown in FIG. 5, the edge of the base plate 110 is rounded and curved inward, so the bearing assembly 140 and the fastening plate 130 inside the base plate 110 are exposed as little as possible. Further, the air that flows over the base plate 110 when the vehicle 1 runs slides over the bent edge, so movement of the base plate 110 by the running wind can be reduced.

The fastening plate 130, which is a plate vertically fastened to a side of the wheel frame 210 and supporting the base plate 110, is a circular plate that has a plurality of fastening holes 133 around the edge for inserting bolts 217 protruding from the wheel body 210 and a center hole 131 formed at the center to prevent interference with the bearing assembly 140 coupled to the fastening plate 130. The fastening holes 133 may be formed at a plurality of wings 132 protruding around the fastening plate 130 to reduce the size of the fastening plate 130.

Accordingly, as shown in FIG. 5, the fastening plate 130 can be firmly fastened to the wheel frame 210 by nuts 216 that are thread-fastened to the ends of the bolts 217 and press the portions around the fastening holes 113 of the fastening plate 130 vertically mounted on the side of the wheel frame 210 with the bots 217 inserted through the fastening holes 113.

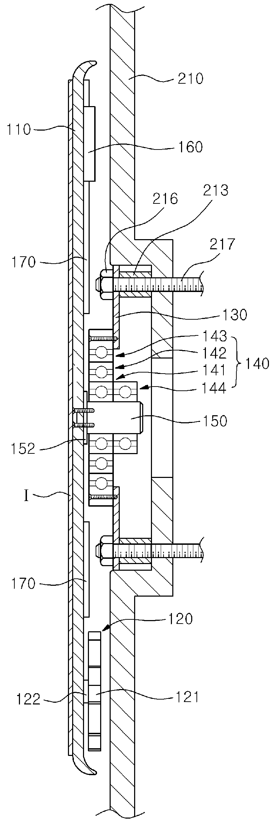

Further, as shown in FIG. 15, when there is a gap between the fastening plate 130 and the wheel frame 210, coupling tubes 213 that are fitted on the bolts 217 between the fastening plate 130 and the wheel frame 210 to support a side of the fastening plate 130 may be provided.

A fixing shaft 150, which is a part fitted in the center of the bearing assembly 140, disposed between the bearing assembly 140 and the base plate 110, and rotatably coupled to the fastening plate 130 by the bearing assembly, has a first end fitted in the bearing assembly 140 and a second end coupled to the center of the base plate 110 as shown in FIG. 4.

Fastening holes 151 for thread-fastening are formed at the second end of the fixing shaft 150, so the fixing shaft 150 can be firmly fastened inside the base plate 110 by bolts that are tightened in fastening holes 111 formed through the base plate 110 at positions corresponding to the fastening holes 151 as shown in FIG. 4. Further, an expansion plate 152 may be formed to be extended along the circumference at the second end fastened to the base plate 110 so that the fixing shaft can be stably supported on the inner side of the base plate 110.

The bearing assembly 140, which is a part coupled to the center of thee fastening plate 130 to physically separate the base plate 110 from rotation of the wheel frame 210, is fixed around the outer side at the center of the fastening plate 130 and may be fitted on the fixing shaft 150 for fastening the base plate 110 to the bearing assembly 140.

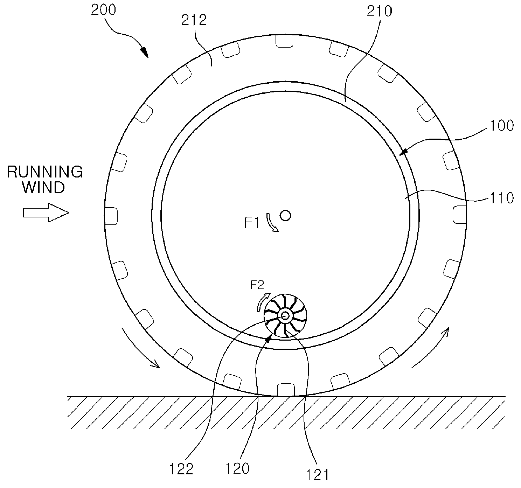

The bearing assembly 140 includes a plurality of bearings 141, 142, and 143 having different diameters and sequentially fitted in larger ones, so torque F1 that rotates the image board 100 can be reduced by friction and inertia generated by rotation of the bearings 141, 142, and 143. When the bearing assembly 140 is composed of three bearings 141, 142, and 143 or more, rotation of the base plate 110 by the innermost bearing 141 and rotation of the wheel frame 210 by the outermost bearing 143 can be physically separated by the bearing 142 between the innermost bearing 141 and the outermost bearing 143, so the torque F1 (see FIG. 11) can be further reduced.

The impeller 120, which is a part generating opposite torque F2 for offsetting the torque F1 generated by rotation of the wheel frame 210 in order to keep the image I shown without moving on the base plate 110 even though the wheel frame 210 rotates at a high speed, is fastened to the inner side of the base plate 110 and is rotated in opposite direction to the wheel frame 210 by running wind flowing inside when the vehicle 1 runs.

An end of a rotational shaft 122 of the impeller 120 is fixed to the inner side of the base plate 110 and a plurality of blades 121 that is curved or inclined to be rotated in the opposite direction to the wheel frame 210 by the running wind from the front is arranged around the rotational shaft 122. Accordingly, as the blades 121 are rotated about the rotational shaft 122 by the running wind, the torque F2 is generated.

Further, though not shown in the figures, a bearing (not shown) for supporting rotation of the blades 121 may be disposed at the joints between the rotational shaft 122 and the blades 121.

As described above, since the impeller 120 that is rotated in the opposite direction to the wheel frame 210 by running wind that flows inside when the vehicle 1 runs is mounted on the lower side of the base plate 110, the torque F1 generated by the wheel frame 210 rotating when the vehicle 1 runs is offset by inertial force F2 generated by rotation of the impeller 120 and friction force F2 applied on the blades 121, whereby it is possible to keep the image I fixed regardless of the rotation of the wheel frame 210. The inertia force F2 generated in the opposite direction to the rotational direction of the wheel frame 210 by the rotation of the blades 121 is caused by a gyro phenomenon.

Further, as the wheel frame 210 rotates at higher speeds, the rotational speed of the impeller 120 is increased and the generated inertia force and the friction force are increased, it is possible to keep the image I fixed regardless of the rotational speed of the wheel frame 210.

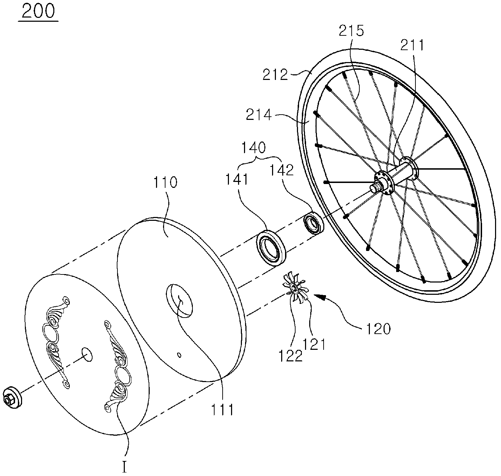

If the wheel frame 210 has spokes 215 and is open at both sides, similar to those of a bicycle, a motor cycle, a golf cart, a wheelchair, and a cart, as shown in FIG. 8, the inner side of bearing assembly 140 is fitted on the rotational shaft 211 of the wheel frame 210 and a fastening hole formed at the center of the base plate 110 is fitted on the outside of the bearing assembly 140, whereby the image board can be vertically mounted on the outer side of the wheel frame 210 such that it can independently rotate.

In this configuration, as in the type of fastening an image board to the wheel frame 210 for a car, a specific fastening plate (not shown) may be provided to more strongly fit the bearing assembly 140 on the rotational shaft 211 or more strongly fit the bearing assembly 140 in the base plate 110.

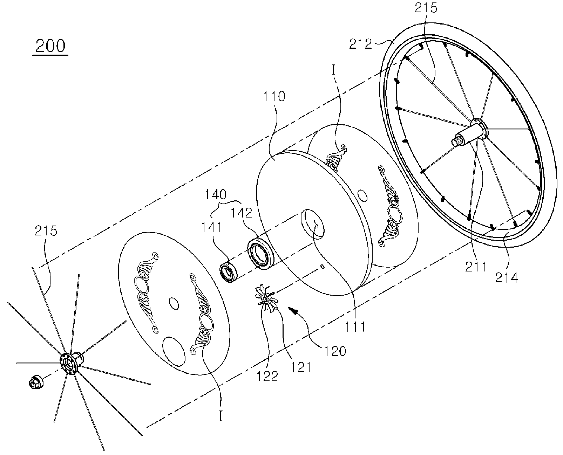

Further, as shown in FIG. 9, the base plate 110 may be vertically fitted inside the wheel frame 210, whereby the image board 100 can be protected from the outside by the spoke without being exposed to the outside and the external appearance can be improved.

To this end, the bearing assembly 140 may be laterally fitted on the horizontal rotational shaft 211 of the wheel frame 210 by the hole therein and the base plate 110 may be fitted on the bearing assembly 140 and vertically fitted inside the wheel frame 210 such that it can be rotated independently from the wheel frame 210 by the bearing assembly 140.

On the other hand, since the impeller 120 is mounted on the base plate 110, the image board 100 according to an embodiment of the present invention may further includes a compensating weight 170 for preventing the total weight of the base plate 110 concentrates on the portion where the impeller 120 is mounted.

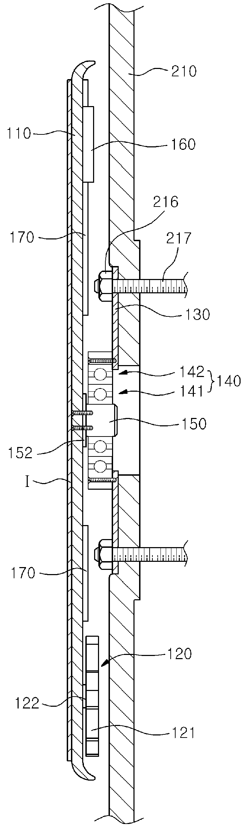

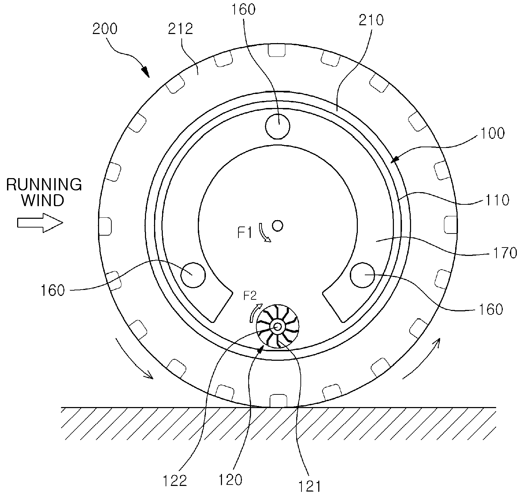

The compensating weight 170, as shown in FIGS. 12 and 13, is disposed around the circumferential edge of the base plate 110 at a predetermined distance from the end of the fixing shaft 150 and has weight corresponding to (the same as or almost close to) the weight of the impeller 120, so it compensates for eccentricity of the total weight of the base plate 110 due to the impeller 120 mounted on the base plate 110.

Further, the image board 100 according to an embodiment of the present invention further includes weights 160 that applies load downward so that the image I on the base plate 110 can be maintained in place when the vehicle 1 is stopped.

As shown in FIG. 13, three weights 160 may be disposed around the circumferential edge of the base plate 110 with regular intervals on the inner side of the base plate 110 at predetermined distances from the end of the fixing shaft 150.

Accordingly, when one of the weights 160 is positioned at an upper portion and the two weights 160 are positioned at a lower portion while the base plate 110 is rotated by external force, as shown in the figure, the load applied downward is increased by the difference between the load of the two weights 160 at the lower portion and the load of the weight 160 at the upper portion. Therefore, the base plate 110 is maintained in the position with the two weights 160 at the lower portion in parallel by the load difference of the weights 160.

The impeller 120 may be rotatably disposed at a lower portion on the inner side of the base plate 110, between two of the three weights 160.

Since the three weights 160 are arranged with regular intervals around the circumferential edge of the base plate 110 at predetermined distances from the end of the fixing shaft 150, eccentricity of the total weight of the base plate 110 is prevented by the weights 160. Accordingly, even if the weights 160 are rotated along with the base plate 110 due to malfunction of the bearing assembly 140, it is possible to preclude the problem that vibration is generated or steering function is adversely influenced by eccentricity of the weights 160, thereby causing a safety accident.

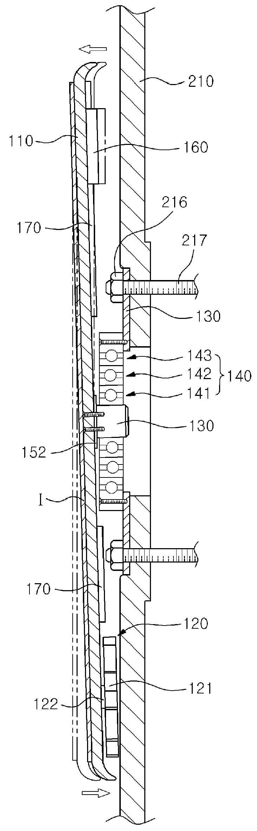

On the other hand, since the bearing assembly 140 is composed of the plurality of the bearings 141, 142, and 143 and sequentially fitted in larger ones, as shown in FIG. 14, the base plate 110 may be spaced by the gaps among the balls between the inner races and the outer races of the bearings 141, 142, and 143 and the fixing shaft 150 may be inclined by the weight of the base plate 110 fastened to the end of the fixing shaft 150, so the base plate 110 that has been vertically disposed may be inclined.

Accordingly, in order to prevent such a phenomena, the bearing assembly 140 according to the embodiment of the present invention, as shown in Fig. 15, may further include a lead bearing 144 that is disposed on the rear end of the innermost bearing 141 and supports the end of the fixing shaft 150 fitted in the inner race of the innermost bearing 141

The lead bearing 144 may be thread-fastened to the innermost bearing 141 to be firmly fixed to the innermost bearing 141. Therefore, the end of the fixing shaft 150 is supported with the end inserted in the inner races of the innermost bearing 141 and the lead bearing 144, so it is possible to minimize the inclination of the base plate 110 due to its own weight.

It will be apparent to those skilled in the art that the foregoing present invention is not limited by the foregoing embodiments and the accompanying drawings, and various modifications and changes may be made without departing from the scope and spirit of the invention

## Claims

1. An image board for a rotation wheel that is mounted on a rotation wheel (200) of a vehicle (1) and displays a still image (I) regardless of rotation of the rotation wheel (200), the image board comprising:
a base plate (110) that is vertically disposed outside or inside a wheel frame (210) mounted on the rotation wheel (200) to rotate independently from the wheel frame (210) and has a predetermined image (I) on one side or both sides; and
an impeller (120) that is fastened to a lower portion of the base plate (110) and rotates in the opposite direction to the rotation wheel (200) by running wind that flows inside when the vehicle (1) runs;

2. The image board of claim 1, further comprising:
a fastening plate (130) that is vertically fastened to an outer side of the wheel frame (210) and rotates along with the wheel frame (210); and
a bearing assembly (140) that is fitted in the center of the fastening plate (130),
wherein the base plate (110) is fitted on the bearing (140) and vertically mounted on the outer side of the wheel frame (210) to be rotated independently from the wheel frame (210) by the bearing assembly (140).

3. The image board of claim 1, further comprising a bearing assembly (140) that is laterally inserted and fitted on a horizontal rotational shaft (211) of the wheel frame (210) by a inserting hole therein,
wherein and the base plate (140) is fitted on the outer circumference of the bearing assembly (140) and vertically fitted inside the wheel frame (210) to be rotated independently from the wheel frame (210) by the bearing assembly (140).

4. A rotation wheel that is mounted at a lower portion of a vehicle (1), rotates to drive the vehicle (1), and displays a still image (I), the rotation wheel comprising:
a wheel frame (210) that is fitted in a tire (212) and rotated by power; and
an image board (100) including: a base plate (110) that is vertically disposed outside or inside a wheel frame (210) to rotate independently from the wheel frame (210) and has a predetermined image (I) on one side or both sides; and an impeller (120) that is fastened to a lower portion of the base plate (110) and rotates in the opposite direction to the wheel frame (210) by running wind that flows inside when the vehicle (1) runs.
